Europäisches Patentamt

(19) European Patent Office

Office européen des brevets

(11) Numéro de publication: **0 252 853**
**B1**

(12) **FASCICULE DE BREVET EUROPEEN**

(45) Date de publication du fascicule du brevet:
**21.03.90**

(21) Numéro de dépôt: **87401647.0**

(22) Date de dépôt: **10.07.87**

(51) Int. Cl.⁴: **C10G 27/10**, B01J 31/18

(54) **Nouveau produit composite catalytique pour l'oxydation des mercaptans et son utilisation pour l'adoucissement des coupes pétrolières.**

(30) Priorité: **11.07.86 FR 8610193**

(43) Date de publication de la demande:
**13.01.88 Bulletin 88/2**

(45) Mention de la délivrance du brevet:
**21.03.90 Bulletin 90/12**

(84) Etats contractants désignés:
**BE CH DE FR GB IT LI LU NL**

(56) Documents cités:
**NL-A- 6 919 643**
**US-A- 4 028 269**
**US-A- 4 248 694**

(73) Titulaire: **COMPAGNIE DE RAFFINAGE ET DE DISTRIBUTION TOTAL FRANCE, 84, rue de Villiers, F-92300 Levallois Perret(FR)**

(72) Inventeur: **Marty, Claude, 66, rue Guillemard, F-76600 Le Havre(FR)**
Inventeur: **Blondeau, René, 10, rue Eugénie Cotton, F-76600 Le Havre(FR)**

㊎ Mandataire; **Jolly, Jean-Pierre et al, Cabinet BROT et JOLLY 83, rue d'Amsterdam, F-75008 Paris(FR)**

ACTORUM AG

## Description

La présente invention est relative à un nouveau catalyseur composite, constitué d'un principe actif et de son support, et à l'utilisation de ce composite pour l'adoucissement en lit fixe des coupes pétrolières par transformation des mercaptans en disulfures.

On sait la grande application qui est faite depuis longtemps (brevets français n° 996.851 et 1.230.502) de la propriété que possèdent certains chélates métalliques pour catalyser la transformation des mercaptans en disulfures lorsqu'ils sont placés en milieu alcalin et en présence d'oxygène.

On sait également que, parmi ces chélates, les phtalocyanines métalliques sont fréquemment utilisées en lit fixe sur certains charbons actifs (brevet français n° 1 301 844) pour l'adoucissement des essences lourdes et des kérosènes. En effet, certaines coupes pétrolières contiennent des mercaptans à chaînes droites ou ramifiées ou de nature aromatique, et/ou contiennent des mercaptans tertiaires et polyfonctionnels de masses moléculaires élevées, qui ne sont que très partiellement solubles dans la solution alcaline nécessaire à la réaction d'adoucissement. Aussi, les coupes pétrolières contenant les mercaptans à oxyder sont généralement adoucies de la façon suivante : l'hydrocarbure à adoucir est mélangé à l'agent oxydant (le plus souvent de l'air), puis traité dans un réacteur à lit fixe contenant un support adsorbant de surface spécifique élevée, préalablement imprégné du chélate métallique, sur lequel le réactif alcalin, généralement une solution de soude aqueuse, est introduit soit en continu à très faible dose, soit en discontinu pour maintenir l'alcalinité nécessaire à la réaction d'oxydation.

Parmi les supports généralement considérés comme potentiellement utilisables pour réaliser un catalyseur composite susceptible de constituer un lit fixe, la littérature mentionne un grand nombre de matériaux solides, parmi lesquels :
- des charbons actifs obtenus par pyrolyse de bois, de tourbe, de lignite, d'os ou de diverses autres matières carbonées,
- des argiles et silicates naturels, comme la terre de diatomée, la terre à foulon, le kieselguhr, l'attapulgite, le feldspath, le montmorillonite, l'halloysite et le kaolin,
- ainsi que des oxydes minéraux réfractaires naturels ou de synthèse, comme l'alumine, la silice, l'oxyde de zirconium, de thorium, de bore ou leurs mélanges.

Cependant, pour être utilisable industriellement, un bon support de catalyse d'adoucissement requiert un certain nombre de propriétés intrinsèques, qui limitent le choix en supports potentiels. En particulier, le support adsorbant, doit :
- être insoluble dans la soude et inerte vis-à-vis de la coupe pétrolière à adoucir,
- posséder suffisamment de sites actifs pour fixer efficacement à sa surface la chélate métallique,
- posséder un volume poreux suffisamment élevé pour permettre la mise en présence des mercaptans les plus encombrants avec le chélate métallique qui l'imprègne,
- posséder une résistance à l'écrasement suffisante pour pouvoir résister aux variations de conditions opératoires imposées par les contraintes d'une marche industrielle.

Aussi, dans la pratique, seuls certains types de charbons actifs ont été retenus comme support catalytique, d'autant plus que ceux-ci peuvent, dans certaines conditions, accélérer l'oxydation des mercaptans, même en l'absence de tout principe actif (brevets américains n° 2 872 412 et 2 908 637). En particulier, les charbons actifs utilisés jusqu'à présent possèdent une densité généralement comprise entre 0,2 et 0,5 et une surface spécifique comprise entre 300 et 2500 m²/g, un volume microporeux compris entre 0,3 et 0,6 cm³/g, et un taux de cendre compris entre 1 et 20 %.

L'utilisation industrielle de catalyseurs composites d'adoucissement, dont le support est un charbon actif, montre cependant que le choix d'un tel support entraîne un certain nombre d'inconvénients au niveau de l'exploitation industrielle. On constate, en effet, que les réacteurs d'adoucissement doivent être arrêtés fréquemment pour laver le composite (en principe à l'eau chaude) et pour retirer autant que possible les sels de sodium organique et les gommes formées à sa surface par peroxydation des hydrocarbures présents dans la charge à adoucir ; la réjuvénation du catalyseur composite ainsi réalisée n'étant que très partielle, le potentiel catalytique des chélates métalliques déposés sur charbons actifs n'est que partiellement utilisé. La durée de vie du composite en marche industrielle sur certaines charges pétrolières est alors fortement diminuée ce qui, compte tenu du coût élevé du charbon actif utilisé comme support, peut nuire à l'économie du procédé.

Au cours de ses nombreux travaux pour résoudre ce problème, la Demanderesse a découvert que les inconvénients ci-dessus mentionnés étaient en grande partie liés au fait que la formation des gommes était vraisemblablement accélérée par les nombreux sites spécifiques des propriétés texturales développées des charbons actifs ; elle s'est donc orientée vers la recherche systématique de nouveaux supports susceptibles d'entrer dans la fabrication de catalyseurs composites à des conditions financières plus économiques et susceptibles d'éviter les lavages trop fréquents du composite.

Elle a ainsi établi que des supports constitués principalement de matériaux inertes minéraux, tels que des silicates ou des oxydes minéraux réfractaires, et de carbones pyrolysés intimement liés auxdits matériaux, pouvaient, bien que possédans des surfaces spécifiques et des volumes poreux très différents de ceux des supports utilisés jusqu'à présent, permettre la mise au point d'excellents catalyseurs composites d'oxydation des mercaptans en disulfures, sans présenter les inconvénients ci-dessus mentionnés.

En effet, lorsque l'on pyrolyse de façon ménagée, c'est-à-dire à une température aussi faible que possible et de préférence entre 300 et 600°C, des mélanges constitués principalement par :
- des précurseurs de carbone, tels que les déchets de laine ou de tout autre composé hydrocarboné de même nature,
- des silicates ou des oxydes métalliques réfractaires, chimiquement inertes, susceptibles de constituer après traitement la trame d'un support solide ayant une bonne résistance à l'écrasement, et
- des sels minéraux solubles tels que, en particulier, les sels de potassium ou de sodium,
on obtient un pyrolysat sous forme de grains solides, duquel les sels minéraux solubles sont susceptibles d'être extraits par simple lavage, créant ainsi à l'intérieur du support des pores de tailles suffisantes pour permettre au principe actif de la réaction d'oxydation de venir se fixer, puis d'être mis en contact avec les mercaptans à adoucir.

En particulier, la Demanderesse a trouvé que les déchets résultant du lavage et de l'épuration des laines de moutons à l'état brut remplissaient les conditions énumérées ci-dessus et permettaient, après lavage à l'eau et imprégnation par un chélate métallique, de constituer un excellent catalyseur composite d'adoucissement des mercaptans à des conditions économiques particulièrement intéressantes.

La présente invention a donc pour objet un nouveau produit composite catalytique, destiné à la mise en oeuvre d'un procédé en lit fixe d'adoucissement des mercaptans contenus dans les coupes pétrolières, comprenant un catalyseur d'oxydation des mercaptans à base de chélate métallique imprégné sur un support adsorbant solide, ce produit composite étant caractérisé en ce qu'il contient :
- entre 0,05 et 10 % en poids de chélate métallique par gramme de composite,
- entre 5 et 35 % en poids de carbone pyrolysé,
- et une matrice minérale représentant 60 à 90% en poids du composite.

Le produit composite objet de la présente invention est en outre caractérisé en ce qu'il possède, de préférence :
- une surface spécifique comprise entre 10 et 100 m² par gramme,
- un volume microporeux compris entre 0,05 et 0,20 cm³ par gramme,
- une résistance à l'écrasement comprise entre 2 et 10 kg par cm²,
- une densité comprise entre 0,5 et 0,9,
- et une teneur en cendres supérieure à 60 %.

Un premier avantage des catalyseurs composites objets de la présente invention, par rapport aux catalyseurs commerciaux utilisés jusqu'à présent est que le support peut être préparé à peu de frais à partir d'une matière première abondante et bon marché, dans un rapport de prix pouvant être de 10 à 20 fois inférieur à celui des charbons actifs usuels.

Les catalyseurs composites objets de la présente invention permettent en outre de réaliser une économie dans l'utilisation industrielle du procédé d'adoucissement en lit fixe, dans la mesure où, grâce à leur surface spécifique peu élevée, ils ne fixent pratiquement pas à leur surface les sels de sodium organiques et les gommes habituellement obtenus au cours du traitement d'adoucissement par peroxydation des hydrocarbures contenus par la charge à traiter. Il est ainsi possible d'éviter d'arrêter régulièrement l'unité industrielle pour lavage du lit catalytique, et de limiter ces arrêts aux seules opérations de réimprégnation du composite ou de changement de ce dernier en fin de cycle.

Un troisième avantage du catalyseur composite objet de la présente invention est lié au fait que la teneur élevée de ce dernier en matériaux réfractaires et inertes lui confrère une résistance à l'écrasement bien supérieure à celle des charbons actifs, ce qui permet, d'une part, d'éviter pendant la marche industrielle de pratiquer un détassement par extension du lit et, d'autre part, de réaliser un chargement plus homogène lors de la préparation du lit catalytique.

Parmi les chélates métalliques utilisables comme principe actif du catalyseur composite, on peut utiliser les composés de type porphyrine ou métalloporphyrine, de type corrine, ou de type phtalocyanine métallique et, en particulier, leurs sels de cobalt, de cuivre, de fer ou de vanadium, ainsi que des composés de la famille des colorants au soufre.

Les exemples qui suivent visent à illustrer l'invention, et n'ont pas de caractère limitatif.

EXEMPLE 1

Cet exemple concerne la préparation d'un composite conforme à l'invention. Le support de départ est obtenu par pyrolyse ménagée du concentrat des boues de lavage de laines brutes destinées à l'industrie textile. Ces concentrats de lavage contiennent, en effet, en proportion relativement constante un mélange de fibres de laine, de sable et de divers sels minéraux solubles, dont la pyrolyse permet d'obtenir un support qui se présente après tamisage, sous la forme de granulat contenant principalement un mélange de trois constituants :
- 5 à 25 % de résidu hydrocarboné,
- 40 à 60% d'une matrice minérale réfractaire et insoluble dans l'eau,
- 20 à 40 % de sels minéraux solubles divers.

On place le granulat directement dans un réacteur, dont le rapport de la hauteur au diamètre est d'environ 4. On procède alors à un lavage intensif du support, de façon à extraire de la matrice les sels minéraux solubles contenus dans cette dernière et à créer ainsi les pores nécessaires à l'imprégnation par le principe actif. Au cours de ce lavage, on envoie de l'eau à une température comprise entre 30 et 100°C (et, de préférence, entre 50 et 90°C) à une vitesse spatiale horaire comprise entre 0,5 et 3 (et, de préférence, entre 1 et 2) à travers le support, en quantité équivalente à 2 à 6 fois le volume du support.

On procède alors à l'imprégnation du support avec la matière active, en envoyant à température ambiante, sur le support ainsi lavé, une solution aqueuse contenant entre 0,1 et 3 grammes par litre de chélate métallique, qui, dans les exemples qui suivent, sera une phtalocyanine de cobalt de type commercial (en général à une concentration de l'ordre de 1 gramme par litre), et en faisant de préférence recirculer la solution effluente.

On arrête l'opération après quelques heures, lorsque 0,05 à 3 % poids de chélate a été déposé sur le support. Le composite ainsi préparé peut être utilisé tel quel pour l'adoucissement des coupes pétrolières, ou être séché puis stocké en vue d'une opération ultérieure.

EXEMPLE 2

Cet exemple concerne le traitement d'une charge industrielle composée d'un mélange 50/50 (en volume) d'essence légère et d'essence lourde issue d'un craqueur catalytique.

Cette charge, de point d'ébullition compris entre 50 et 210°C et dont la densité à 15°C est de 0,8, contient 40 % de composés aromatiques, 15 % d'oléfines et 45 % d'hydrocarbures saturés ; elle contient, en outre, environ 5000 ppm de phénols, 300 à 800 ppm de soufre de mercaptan et 1000 à 5000 ppm de soufre total.

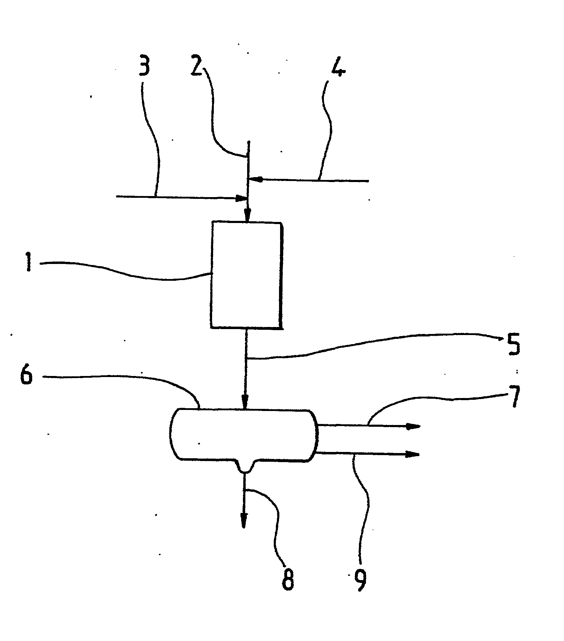

La réaction est effectuée selon le schéma de la figure 1. La charge à adoucir est placée dans un réservoir qui alimente le réacteur 1 par la ligne 2, avec un appoint d'un agent oxydant, qui est de préférence de l'air (ligne 3), et un appoint de solution basique, qui sera de préférence une solution de soude aqueuse (ligne 4). La charge à adoucir quitte le réacteur par la ligne 5 pour être introduite dans un séparateur 6, d'où l'air, la soude, et l'essence adoucie sont évacués respectivement par les lignes 7, 8 et 9.

Les conditions opératoires sont les suivantes :
- volume du composite : 100 cm³,
- pression relative : 2 à 30 bar et, de préférence, 10 bar,
- température : 40 à 60 °C et, de préférence, 40°C,
- volume d'air par gramme de mercaptan : 1 à 10 Nl/g et, de préférence, 2 Nl/g,
- débit de soude diluée à 2 % : 0,1 à 5 et, de préférence, inférieur à 1 % de la charge en volume,
- vitesse spatiale horaire de la charge : 0, 5 à 4 et, de préférence, 1.

L'essence adoucie présente les caractéristiques suivantes, comparées à la charge :

| | Charge | Effluent |
|---|---|---|
| Soufre total (ppm) | 4000 | 4000 |
| Mercaptans (ppm) | 700 | $<1$ |
| Cobalt (ppm) | $<0,5$ | $<0,5$ |
| Gommes lavées actuelles (mg/100 ml) | $<10$ | $<5$ |

EXEMPLE 3

Cet exemple vise à montrer, sur une coupe pour carburéacteurs, les avantages du composite selon l'invention par rapport à un catalyseur supporté par un charbon actif de type classique.

La coupe de départ, dont la densité à 15°C est de 0,8, contient 150 ppm de mercaptan. Elle provient d'une coupe de distillation atmosphérique d'un brut d'origine QATAR de point d'ébullition compris entre 145 et 235°C.

Les conditions opératoires sont les suivantes :
- volume du composite : 100 cm³,
- pression relative : 10 bar,
- température : 40°C,
- débit d'air : 25 ml/h,
- débit de soude diluée à 8 % en pds : 0,3 ml/h
-vitesse spatiale horaire : 1.

Les caractéristiques de la coupe pour carburéacteurs sont rassemblées dans le tableau ci-après, dans lequel la colonne correspondant à l'effluent A indique les caratéristiques de la coupe traitée avec un composite préparé selon l'exemple 1, tandis que la colonne correspondant à l'effluent B indique les caractéristiques de la coupe traitée avec un phtalocyanine de cobalt déposé sur charbon CECA.

|  | Charge | Effluent A | Effluent |
|---|---|---|---|
| Soufre total (ppm) | 3000 | ≤ 3000 | ≤ 3000 |
| Mercaptans (ppm) | 150 | 10 à 15 | 15 à 20 |
| Phénols (ppm) | 150 | < 150 | < 150 |
| Couleur Saybolt | | > 20 | > 20 |
| Cobalt (ppm) | < 5 | < 5 | < 5 |
| Gommes lavées | | | |
| actuelles (mg/100 ml) | | < 7 | < 7 |

Ces résultats comparatifs montrent bien que le catalyseur composite objet de la présente invention (cas A) qui est très bon marché, présente une nette supériorité sur un catalyseur de type classique à base de charbon actif (cas B), puisque les effluents réactionnels contiennent, de façon significative, moins de mercaptans.

**Revendications**

1. Nouveau produit composite catalytique destiné à la mise en oeuvre d'un procédé en lit fixe d'adoucissement des mercaptans contenus dans les coupes pétrolières, comprenant un catalyseur d'oxydation des mercaptans à base de chélate métallique imprégné sur un support adsorbant solide, ce produit composite étant caractérisé en ce qu'il contient :
- entre 0,05 et 10% en poids de chélate métallique par gramme de composite,
- entre 5 et 35 % en poids de carbone pyrolysé,
- et une matrice minérale représentant 60 à 90 % en poids du composite.

2. Nouveau produit composite catalytique suivant la revendication 1, caractérisé en ce qu'il possède une surface spécifique comprise entre 10 et 100 m²/gramme.

3. Nouveau produit composite catalytique suivant l'une des revendications 1 et 2, caractérisé en ce qu'il possède un volume microporeux compris entre 0,05 et 0,20 cm³ par gramme.

4. Nouveau produit composite catalytique suivant l'une des revendications 1, 2 et 3, caractérisé en ce que sa résistance à l'écrasement est comprise entre 2 et 10 kg/cm².

5. Nouveau produit composite catalytique suivant l'une des revendications 1 à 4, caractérisé en ce qu'il possède une densité comprise entre 0,5 et 0,9.

6. Nouveau produit composite catalytique suivant l'une des revendications 1 à 5, caractérisé en ce qu'il possède une teneur en cendre supérieure à 60 %.

7. Nouveau produit composite catalytique suivant l'une des revendications 1 à 6, caractérisé en ce que le support est obtenu par pyrolyse ménagée des concentrats de lavage des laines brutes destinées à l'industrie textile.

8. Nouveau produit composite catalytique suivant la revendication 7, caractérisé en ce que le composite est obtenu par lavage à l'eau du pyrolysat à une température comprise entre 20 et 90°C suivie d'une imprégnation par un chélate métallique en solution aqueuse.

9. Nouveau produit composite catalytique suivant la revendication 8, caractérisé en ce que le chélate métallique est choisi dans le groupe comprenant les composés de type porphyrine ou métalloporphyrine, de type corrine, de type phtalocyanine métallique, notamment leurs sels de cobalt, de cuivre, de fer ou de vanadium, ainsi que la famille des colorants au soufre.

10. Nouveau produit composite catalytique suivant la revendication 9, caractérisé en ce que le chélate métallique est une phtalocyanine de cobalt.

11. Procédé de préparation de catalyseur composites destinés à la mise en oeuvre d'un procédé en lit fixe d'adoucissement des mercaptans contenus dans les coupes pétrolières, caractérisé en ce que l'on procède à un lavage à l'eau, à une température comprise entre 30 et 100°C, d'un résidu de pyrolyse d'un mélange constitué de précurseur de carbone, de silicates ou d'oxydes métalliques réfractaires, et de sels minéraux solubles de potassium ou de sodium, et en ce que l'on imprègne le produit ainsi lavé par mise en contact de celui-ci avec une solution aqueuse d'un chélate métallique contenant entre 0,5 et 3 g/litre dudit chélate, jusqu'à ce que 0,05 à 4 % poids du chélate soit déposé.

12. Procédé selon la revendication 11, caractérisé en ce que ledit résidu de pyrolyse est constitué, avant l'opération de lavage de :
- 5 à 25 % poids de résidu hydrocarboné,
- 40 à 60 % en poids d'une matrice minérale réfractaire, et
- 20 à 40 % en poids de sels minéraux solubles.

13. Procédé selon l'une des revendications 11 et 12, caractérisé en ce que le chélate métallique est choisi dans le groupe comprenant les composés de type porphyrine ou métalloporphyrine, de type corrine, de type phtalocyanine métallique, notamment leurs sels de cobalt, de cuivre, de fer ou de vanadium ainsi que la famille des colorants au soufre.

14. Procédé selon la revendication caractérisé en ce que le chélate métallique est un phtalocyanine de cobalt.

15. Utilisation des produits composites objet des revendications 1 à 10 pour l'adoucissement en lit fixe des coupes pétrolières.

## Patentansprüche

1. Neue katalytische Zusammensetzung für die Durchführung eines Festbettverfahrens zur Beseitigung von Mercaptanen in Erdölfraktionen, welche einen Mercaptanoxidationskatalysator auf Metallchelatbasis und einen festen, absorbierenden Support aufweist, der mit dem Katalysator imprägniert ist, gekennzeichnet durch
einen Gehalt zwischen 0,05 und 10 Gewichtsprozent an Metallchelat je Gramm Zusammensetzung,
einen Gehalt zwischen 5 und 35 Gewichtsprozent an pyrolysiertem Kohlenstoff und
einen Gehalt zwischen 60 und 90 Gewichtsprozent an mineralischer Matrix, bezogen auf die Zusammensetzung.

2. Neue katalytische Zusammensetzung nach Anspruch 1, gekennzeichnet durch eine spezifische Oberfläche zwischen 10 und 100 m²/Gramm.

3. Neue katalytische Zusammensetzung nach Anspruch 1 oder 2, gekennzeichnet durch ein Mikroporenvolumen zwischen 0,05 und 0,20 cm³/Gramm.

4. Neue katalytische Zusammensetzung nach Anspruch 1, 2 oder 3, gekennzeichnet durch einen Verdichtungswiderstand zwischen 2 und 10 kg/cm².

5. Neue katalytische Zusammensetzung nach einem der Ansprüche 1 bis 4, gekennzeichnet durch eine Dichte zwischen 0,5 und 0,9.

6. Neue katalytische Zusammensetzung nach einem der Ansprüche 1 bis 5, gekennzeichnet durch einen Aschegehalt größer als 60%.

7. Neue katalytische Zusammensetzung nach einem der Ansprüche 1 bis 6, dadurch gekennzeichnet, daß der Support durch schonende Pyrolyse von Konzentraten erhalten worden ist, welche vom Waschen von Rohwollen für die Textilindustrie herrühren.

8. Neue katalytische Zusammensetzung nach Anspruch 7, dadurch gekennzeichnet, daß sie durch Waschen des Pyrolysates mit Wasser bei einer Temperatur zwischen 20 und 90°C und anschließendes Imprägnieren mit einem Metallchelat in wäßriger Lösung erhalten worden ist.

9. Neue katalytische Zusammensetzung nach Anspruch 8, dadurch gekennzeichnet, daß das Metallchelat aus der Gruppe bestehend aus den Verbindungen des Typs Porphyrin oder Metallporphyrin, des Typs Corrin, des Typs Metallphthalocyanin, insbesondere deren Kobalt-, Kupfer-, Eisen- oder Vanadiumsalzen, sowie der Familie der Schwefelfarbstoffe ausgewählt ist.

10. Neue katalytische Zusammensetzung nach Anspruch 9, dadurch gekennzeichnet, daß das Metallchelat ein Kobaltphthalocyanin ist.

11. Verfahren zur Herstellung von Katalysatorzusammensetzungen für die Durchführung eines Festbettverfahrens zur Beseitigung von Mercaptanen in Erdölfraktionen, dadurch gekennzeichnet, daß der Rückstand der Pyrolyse eines Gemisches aus Kohlenstoffvorläufer, feuerfesten Metallsilikaten oder -oxiden und löslichen Kalium- oder Natriummineralsalzen mit Wasser bei einer Temperatur zwischen 30 und 100°C gewaschen und das so gewaschene Produkt imprägniert wird, indem man es mit einer wäßrigen Lösung eines Metallchelats mit einem Chelatgehalt zwischen 0,5 und 3 g/Liter so lange in Berührung bringt, bis eine Chelatablagerung zwischen 0,05 und 4 Gewichtsprozent erzielt worden ist.

12. Verfahren nach Anspruch 11, gekennzeichnet durch die folgende Zusammensetzung des Pyrolyserückstandes vor dem Waschen:

5 bis 25 Gewichtsprozent Kohlenwasserstoffrückstand,

40 bis 60 Gewichtsprozent feuerfeste mineralische Matrix und

20 bis 40 Gewichtsprozent lösliche Mineralsalze.

13. Verfahren nach Anspruch 11 oder 12, dadurch gekennzeichnet, daß das Metallchelat aus der Gruppe bestehend aus den Verbindungen des Typs Porphyrin oder Metallporphyrin, des Typs Corrin, des Typs Metallphthalocyanin, insbesondere deren Kobalt-, Kupfer-, Eisen- oder Vanadiumsalzen, sowie der Familie der Schwefelfarbstoffe ausgewählt wird.

14. Verfahren nach Anspruch 13, dadurch gekennzeichnet, daß als Metallchelat ein Kobaltphthalocyanin eingesetzt wird.

15. Verwendung der Zusammensetzungen nach den Ansprüchen 1 bis 10 zur Festbett-Entmercaptanisierung von Erdölfraktionen.

## Claims

1. A novel composite catalytic product intended for carrying out a fixed bed process for sweetening mercaptans contained in petroleum fractions, comprising a catalyst for oxidation of mercaptans based on metallic chelates impregnated on a solid adsorbant support, said composite product being characterised in that it contains:

– between 0.05 and 10% by weight of metallic chelate per gramme of composite;

– between 5 and 35% by weight of pyrolysed carbon;

– and a mineral matrix representing 60 to 90% by weight of composite.

2. A novel composite catalytic product according to claim 1, characterised in that it has a specific surface area of between 10 and 100 m²/gramme.

3. A novel composite catalytic product according to either of claims 1 and 2, characterised in that it has a microporous volume of between 0.05 and 0.20 cm³ per gramme.

4. A novel composite catalytic product according to any one of claims 1, 2 and 3, characterised in that its crushing strength is between 2 and 10 kg/cm².

5. A novel composite catalytic product according to any one of claims 1 to 4, characterised in that it has density of between 0.5 and 0.9.

6. A novel composite catalytic product according to any one of claims 1 to 5, characterised in that it has an ash content of more than 60%.

7. A novel composite catalytic product according to any one of claims 1 tc 6, characterised in that the support is obtained by gradual pyrolysis of washing concentrates of raw wools intended for the textile industry.

8. A novel composite catalytic product according to claim 7, characterised in that the composite is obtained by washing the pyrolysate with water at a temperature of between 20 and 90°C, followed by impregnation with a metallic chelate in aqueous solution.

9. A novel composite catalytic product according to claim 8, characterised in that the metallic chelate is selected from the group comprising compounds of the porphyrin or metalloporphyrin type, of the corrin type, of the metallic phthalocyanin type, in particular their salts of cobalt, copper, iron or vanadium, and also the family of sulphur dyes.

10. A novel composite catalytic product according to claim 9, characterised in that the metallic chelate is a cobalt phthalocyanin.

11. A process for the preparation of composite catalysts intended for carrying out a fixed bed process for sweetening mercaptans contained in petroleum fractions, characterised in that a residue of the pyrolysis of a mixture composed of a precursor of carbon, of refractory metal oxides or silicates and soluble mineral salts of potassium or sodium is washed with water at a temperature of between 30 and 100°C, and in that the product thus washed is impregnated by bringing it into contact with an aqueous solution of a metallic chelate containing between 0.5 and 3 g/litre of said chelate until 0.05 to 4% by weight of the chelate is deposited.

12. A process according to claim 11, characterised in that, before the washing operation, said residue of pyrolysis is composed of:

– 5 to 25% by weight of hydrocarbon residue;

– 40 to 60% by weight of a refractory mineral matrix, and

– 20 to 40% by weight of soluble mineral salts.

13. A process according to either of claims 11 and 12, characterised in that the metallic chelate is selected from the group comprising compounds of the porphyrin or metalloporphyrin type, of the corrin type, of the metallic phthalocyanin type, in particular their salts of cobalt, copper, iron or vanadium, and also the family of sulphur dyes.

14. A process according to claim 13, characterised in that the metallic chelate is a cobalt phthalocyanin.

15. Use of the composite products forming the subject matter of claims 1 to 10 for the fixed bed sweetening of petroleum fractions.